# EUROPEAN PATENT APPLICATION

(11) **EP 4 775 312 A1**
(43) Date of publication of application: **15.07.2026**
(21) Application number: 25222398.7
(22) Date of filing: 10.12.2025
(51) Int. Cl.: B03C 1/033, B03C 1/28, B03C 1/30, B01D 21/26, B01D 35/02, B01D 35/06, B01D 36/04

(54) **SEPARATOR DEVICE**

(30) Priority: 08.01.2025 GB 202500203
(71) Applicant: Adey Holdings (2008) Limited, Haresfield, Stonehouse GL10 3EZ (GB)
(72) Inventor: Button, Mark, Stonehouse GL10 3EZ (GB); Pathan, Kashem, Stonehouse GL10 3EZ (GB); Weichert, Adrian, Stonehouse GL10 3EZ (GB)
(74) Representative: Noble, Frederick

(57) **Abstract**

Disclosed is a separator device 10 for removing suspended particles from heating and/or cooling system fluid. The separator device 10 comprises an inlet 16 and outlet 18 for fluid flow, a method of generating a swirl of fluid on entry to the housing 12, a magnetic element and mesh filter 46 positioned between the inlet 16 and outlet 18 and a sediment collection region 76 for the retainment of separated debris. The mesh filter 46 is in the form of a basket, having an open end facing the bottom of the separator device 10, just above the inlet 16, and the sediment collection region 76 is below the inlet.

## Description

The present invention relates to a separator device and particularly to a separator device for removing solid particles from central heating and/or cooling system fluid.

### BACKGROUND TO THE INVENTION

Many heating systems comprise a circuit including a boiler and multiple radiators. Heating fluid, commonly water, is pumped around the circuit. With use, components such as pipes, valves and radiators corrode and deteriorate, releasing suspended debris into the circulating fluid. This debris, largely comprised of magnetite (iron-oxide) from the corrosion of ferrous materials, accumulates over time. This may especially be the case as certain components such as radiators are typically not replaced as often as others, such as boilers. Additional debris may also enter the circulating fluid when open expansion tanks are part of the heating system. This debris causes various functional issues, including increased strain on the fluid pump, worsened performance of the whole system, increased energy consumption and potential damage to the boiler and associated components. These issues may be exacerbated with newer high-efficiency boilers as these often have narrow channels to maximise the efficiency of the heat exchanger. The fluid used in the system should therefore be kept clean.

One solution to reduce the build-up of the aforementioned debris in a clean system is to install a separator device in the central heating and/or cooling system to continually remove suspended debris. A separator device is optimally installed on the pipe returning fluid to the boiler. Various devices to remove suspended debris exist, commonly containing a magnetic component. A magnet is integrated into the housing of the separator in the path of the fluid flow, capturing and retaining magnetic particles, primarily magnetite, suspended in the flow. These particles accumulate on the magnet until cleaned, and thus do not enter the boiler. Additional features, for example flow diverters to set up a swirl in the housing, may be provided to allow the suspended particles adequate time to come into contact with the magnet and adhere.

Magnetic separators may also contain mechanical arrangements for particle separation, with the addition of mesh filters being known. Dirty water flows through a mesh, with debris becoming trapped in the apertures until cleaned. Mesh-based filters are reliant on regular cleaning to remain functional, with an excess of suspended particles potentially obstructing the apertures if not removed. A filter with a clogged mesh will obstruct flow of water through the filter, potentially leading to reduced efficiency of the heating system and even damage to components such as pumps.

The object of this invention is to provide a separator device that reduces or substantially averts the above-mentioned problems.

### STATEMENT OF INVENTION

According to the present invention there is provided a separator device for removing suspended particles from central heating and/or cooling system fluid,
the separator device being comprised of:
a housing in the form of a hollow container;
an inlet to the housing and an outlet from the housing, the inlet being spaced above a floor of the housing and arranged for setting up a swirl of fluid within the housing, and the outlet being spaced above the inlet;
a sediment collection region in a lower portion of the housing, disposed between the floor of the housing and the inlet, to allow gravity induced particle separation;
a magnetic element for attracting and retaining magnetic particles, at least part of the magnetic element being positioned above the inlet and below the outlet;
a filtration component in the form of a basket, the basket having an open end positioned above the inlet and below the outlet and facing the sediment collection region, and the basket including mesh sidewall(s) surrounding at least part of the magnetic element, the mesh sidewall(s) defining a pre-filtration flow region inside the basket and a post-filtration flow region between the outside of the basket and an inside wall of the housing; and
a barrier separating the post-filtration flow region outside the basket from a region below the basket, for preventing flow from the inlet to the outlet other than through the mesh.

The separator device removes suspended particles from fluid in three main stages. Firstly, due to the swirling motion of fluid at the inlet, heavier suspended particles settle to the bottom of the housing through gravity. Because the inlet is spaced from the floor of the housing, a region at the bottom of the housing, the sediment collection region, has relatively low flow within it. Once particles are settled at the bottom of the housing, they will not tend to be dislodged.

Lighter particles which do not settle out in this initial stage travel up through the open end of the mesh basket, into the pre-filtration flow region inside the basket. The barrier prevents fluid from travelling up into the post-filtration flow region on the exterior side of the mesh basket.

Magnetic particles are attracted to and retained on the magnetic element within the basket. Magnetic particles remain here until the separator device is cleaned.

Non-magnetic particles larger than the mesh size are prevented from passing through the mesh, and initially may be trapped against the interior of the mesh. However, the swirling motion of the fluid helps in dislodging this trapped material or prevents it from becoming trapped in the first place. Particles which cannot pass through the mesh then fall to the sediment collection region at the bottom of the housing. Because of the space between the floor of the housing and the inlet, the flow in the sediment collection region, especially close to the floor of the housing, is slow, and so the particles once settled on the floor of the housing will tend to be retained there until the separator device is cleaned.

The disclosed particle separator device has several key features to mitigate some of the aforementioned issues facing current heating and/or cooling system separator devices on the market. The design of the separator device allows for a multi-step approach in particle separation. By the time fluid reaches the mesh, at least some heavier particles have already fallen out of suspension and settled at the bottom of the housing, and magnetic particles have already been captured by the magnetic element. This reduces the volume of particles which are captured in the mesh, reducing the possibility of clogging.

Furthermore, lighter sediment that is stopped by the mesh is continuously dislodged by the swirling fluid, eventually settling alongside the heavier particles in the sediment collection region. This reduces the likelihood of the apertures in the mesh becoming obstructed. This self-cleaning action extends the time intervals between servicing to better align with actual maintenance carried out by users. A reduced chance of the mesh being blocked by excess debris ensures that fluid flow does not need to bypass the mesh basket at any point, resulting in all fluid passing through the mesh and ensuring maximum filtration. Complete separation of particles from the fluid contributes to increased efficiency of the heating and/or cooling system and alleviates potential issues arising from debris.

The diameter of the apertures in the mesh may be approximately 200-800 microns. These relatively large apertures (compared with some known mesh filters) are only intended to capture the lighter non-magnetic particles that were not separated from the fluid in the sediment collection region. Typically, particles smaller than this diameter are ferrous in nature and are captured and retained by the magnetic element, so do not travel through the mesh to the post-filtration region.

The size of the mesh does not present a significant obstruction to fluid flow and therefore maintains fluid flow rates, does not produce excess strain on the pump and ensures that the heating / cooling system can operate efficiently, as designed.

A lid may be located at the top of the housing at the end of the housing which is closest to the outlet. This lid may be attached to the housing by screwing corresponding threads in the lid and housing together. This allows for removal of the lid to access the internal filtration components for ease of cleaning and/or servicing.

A sheath may partly or wholly surround the magnetic element. The sheath prevents the captured magnetic particles from adhering directly to the magnetic element. This allows the magnetic element to be removed from the sheath, removing the magnetic field holding the particles in place and enabling easy cleaning of the magnetic particles off the sheath. The sheath may be made from, for example, thin plastics.

The magnetic element may be attached to the lid. The magnetic element is preferably elongate and extends downwards from the lid, into the housing of the separator device when assembled with the lid on. In this way, at least part of the magnetic element is positioned in a region which is vertically between the inlet and the outlet. In effect, the magnetic element and lid act as a singular piece during disassembly, rotating together as the lid is unscrewed, with the magnetic element being pulled out of the housing when the lid is lifted off. This joint construction allows for easy removal of the magnetic element (and attached components) for cleaning.

At the bottom end of the housing, the magnetic element may be attached to a fixing element, which rests on the floor of the housing. The magnetic element may be attached to the fixing element by a screw thread. The screw thread is preferably of sufficient length that when the lid is unscrewed from the housing for disassembly the magnetic element remains secured to the fixing element at the floor of the housing - the screw thread between the fixing element and the magnetic element may be partly unscrewed but sufficient length of the screw thread remains screwed in that the fixing element remains attached to the magnetic element. Thus, the lower end of the magnetic element remains connected to the fixing element when the lid is removed, facilitating the removal of the internal components, including the lid, magnetic element, and fixing element, as one piece.

This arrangement allows the sheath to be held in place, surrounding the magnetic element, by being clamped between the lid and the fixing element. When the lid is removed from the housing, the magnetic element is attached to the lid, the fixing element is attached to the magnetic element, and the sheath is held between the lid and the fixing element. Hence all of the magnetic element, sheath, and fixing element come out together with the lid. The fixing element can then be completely unscrewed from the magnetic element, to release the sheath. The sheath is then removed from the magnetic element so that captured magnetic particles can easily be cleaned off the sheath.

The filtration basket may comprise a tubular mesh. Preferably, support pieces (e.g. horizontal and vertical ribs and spines) span the mesh forming a filter shell. This filter shell provides structural support and rigidity to the basket while limiting the surface area of the mesh that is obscured. This support provides structure to the basket when the basket is removed from the separator device for regular cleaning and maintenance and allows for ease of use in removing the basket from the housing.

The filter shell may be attached to the magnet sheath so that it can easily be removed along with the other components during disassembly. In one embodiment, the attachment is in the form of a bayonet-style connection.

The barrier that separates the post-filtration region may be in the form of a flange at a lower end of the mesh basket. The flange may contact the inside wall of the housing and preferably seals against the wall of the housing, for example with an O-ring. This ensures an adequate seal between the barrier and the interior wall of the housing to prevent fluid bypassing the mesh basket.

The sheath is preferably loose enough on the magnetic element that the magnetic element rotates inside the sheath when the lid is rotated in order to unscrew it from the housing. This means that the sheath, and the mesh basket, can remain stationary while the lid is being unscrewed. This prevents wear and damage to the seal of the barrier against the wall of the housing.

In one embodiment, the fixing element which holds the sheath onto the magnetic element includes formations which interfere with corresponding formations at the bottom of the housing, preventing rotation of the fixing element when the magnetic element is rotated by rotating the lid. This ensures that, immediately on loosening the lid, the fixing element is also slightly unscrewed from the magnetic element, so that the sheath is loosened to allow relative rotation of the sheath and magnetic element, in turn allowing the sheath, basket, flange and seal to remain stationary while the lid is unscrewed.

A valve may be provided on the inlet and/or a valve may be provided on the outlet. Preferably, valve(s) are provided for isolating both of the inlet and outlet from the central heating system circuit. Once isolated from the system circuit, the separator device may be removed and disassembled for cleaning.

A bleed valve may also be provided on the separator to release pressure for maintenance and prior to opening for regular cleaning. The bleed valve may also be used to remove any air which has accumulated in the separator device after reassembly following cleaning.

Preferably, a removable drain plug is provided at the bottom of the housing.

Preferably, the housing is substantially cylindrical. The magnetic element is preferably in the form of a substantially cylindrical rod which extends into the housing, and is preferably disposed along a central axis of the housing. The basket is preferably in the form of a substantially cylindrical shell.

The magnetic element may comprise a series of substantially cylindrical magnetic billets, the billets being arranged in a line with like poles facing each other. Each billet may be apertured with a rod passing through the centre of each billet. Spacers may be provided between the billets. The billets may be clamped together by endpieces which may be fixed on to the rod.

According to a second aspect of the invention, there is provided a method of removing debris from a central heating system, the method comprising providing a separator device according to the first aspect of the invention. The separator device is preferably provided on the pipe returning heating fluid to the boiler.

According to another aspect of the invention, there is provided a central heating system provided with a separator device as described.

### BRIEF DESCRIPTION OF THE DRAWINGS

For a better understanding of the present invention, and to show more clearly how it may be carried into effect, reference will now be made by way of example only to the accompanying drawings, in which:
Figure 1 is a view from one side of a separator device according to the invention, which is attached to part of a central heating and/or cooling system;
Figure 2 is a view from in front of the housing of the separator device of Figure 1;
Figure 3 is a perspective view of the internal filtration components attached to the lid of the separator device of Figure 1;
Figure 4 is a perspective view of a magnetic element fixed to a lid, being part of another embodiment of a separator device according to the invention;
Figure 5 is a perspective view of a filter basket, mesh and barrier of the separator device of Figure 1;
Figure 6 is a cross-section through the separator device of Figure 1; and
Figure 7 is the cross-section of Figure 6, annotated to show the flow of fluid through the separator device.

### DESCRIPTION OF PREFERRED EMBODIMENTS

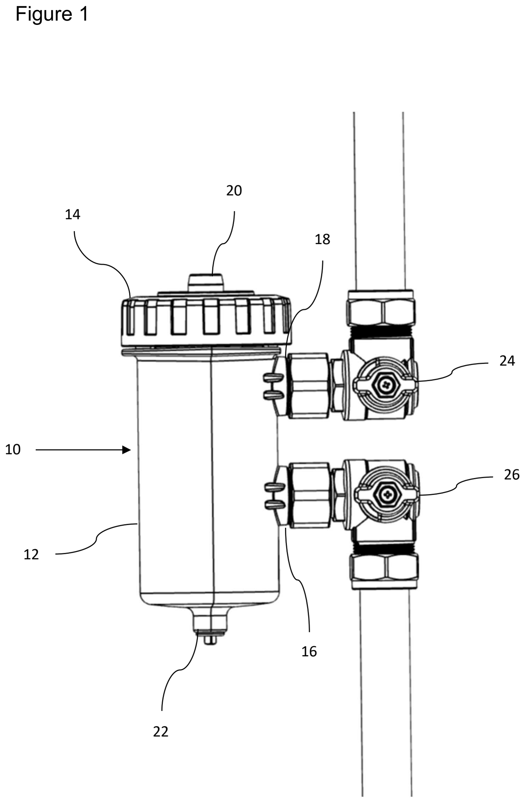

Referring firstly to Figure 1, a separator device for removing and retaining suspended particles from heating and/or cooling system fluid is generally indicated at 10. The separator device 10 is shown *in situ,* attached to the pipes of the central heating and/or cooling system, preferably on the return pipe, close to the boiler. The separator device 10 is attached to the pipes of the central heating and/or cooling system by valves 24, 26, so that the separator can be isolated from the heating system circuit when required.

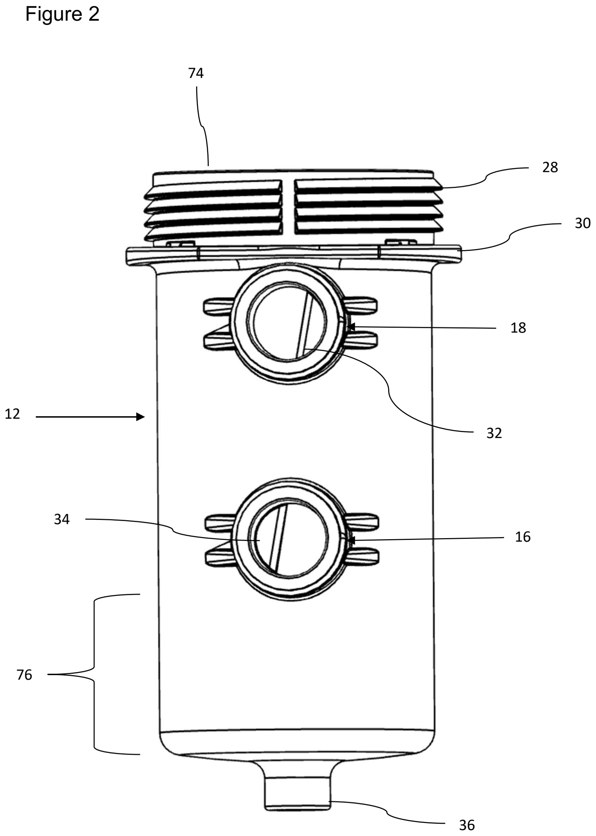

A housing 12 houses the internal filtration components. The housing 12 is cylindrical in shape with a protrusion ending in a hole at the bottom of the housing for a drain valve 22. The open top portion of the housing 12 is closed with a removable lid 14, and a bleed valve 20 is provided on the lid. The separator device 10 is designed to be orientated in such a way that the top portion of the housing 12 and lid 14 face upwards and the bottom portion of the housing 12 faces downwards. The outlet 18 and inlet 16 are positioned on the same side of the cylindrical housing 12, and connect to the central heating and/or cooling system circuit. The outlet 18 is located above the inlet 16 towards the top portion of the housing 12. The inlet 16 is located below the outlet 18 but sufficiently above the floor of the housing 12 to allow for the formation of a sediment collection region (76, Figure 2).

The housing (Figure 2) is one moulded hollow cylindrical form, having an open end 74 at the top of the housing, with a small ridge 30 protruding from the housing 12 underneath this for the lid 14 to rest on when closed. Between the ridge 30 and the open end 74 of the housing 12, there are threads 28 which correspond with matching threads in the lid 14, serving as the mechanism by which to attach the lid to the housing. Directly below the ridge 30, on the wall of the housing, the outlet 18 is located. The outlet 18 is in the form of a spigot extending perpendicularly from the cylindrical wall of the housing. Inside the outlet spigot, partly obstructing the opening, there is an angled blockage 32, covering around one third of the outlet opening 18. This angled blockage 34 is mirrored on the inlet 16, covering the same percentage of the inlet 16 opening. The angled blockage, particularly the angled blockage on the inlet, enables the fluid to swirl on entry. Between the inlet 16 and the floor of the housing 12, there is a gap that acts as a sediment collection region 76 for non-magnetic particles that fall out of suspension as the fluid swirls on entry to the housing 12. In the centre of the housing floor 12, there is a protrusion with a central hole 36 to allow a drain valve 22 to be fitted.

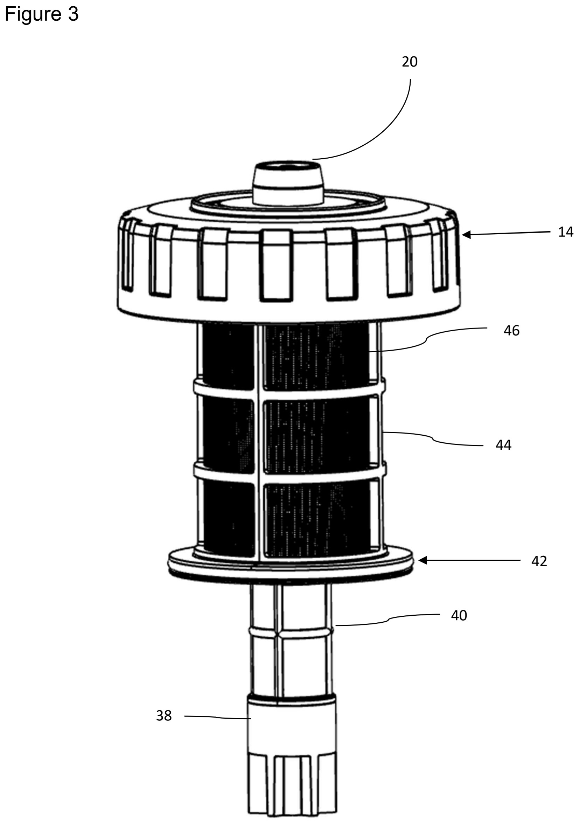

In Figure 3, the lid 14 is shown, removed from the housing (12). Various filtration components are attached to the lid 14, and preferably remain attached to the lid, at least initially, when it is removed from the housing. In particular, a central magnet sheath 40 is clamped between the lid 14 and a fixing element 38. The fixing element rests on the floor of the housing 12 when the separator is assembled. The sheath 40 in turn provides an anchor point for a basket 44, mesh 46 and barrier 42.

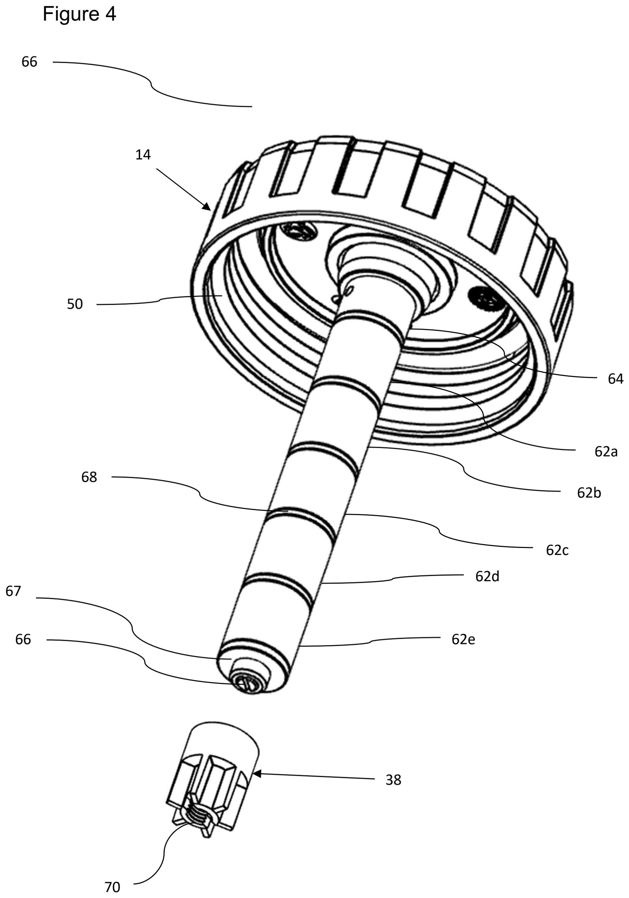

Referring now to Figure 4, a magnetic element is located inside the sheath (40). The magnetic element comprises a central rod 66 around which five cylindrical magnets 62a-e are disposed. This rod 66 is attached to the lid 14 via a plug 64. The magnets are evenly spaced along the rod 66 with disks 68 keeping them separated. An end cap 67 is screwed to the end of the rod 66 when the magnets 62 are assembled onto the rod. At the lower end, the magnetic element is attached to a fixing element 38 by a screw thread. The magnetic element is covered by the sheath 40, which rests on top of the fixing element 38. All components shown in Figure 3 and Figure 4 are attached either directly or indirectly to the lid 14 at the top of the separator device 10 so that when the lid is removed, all of these components can be removed from the filter in one piece.

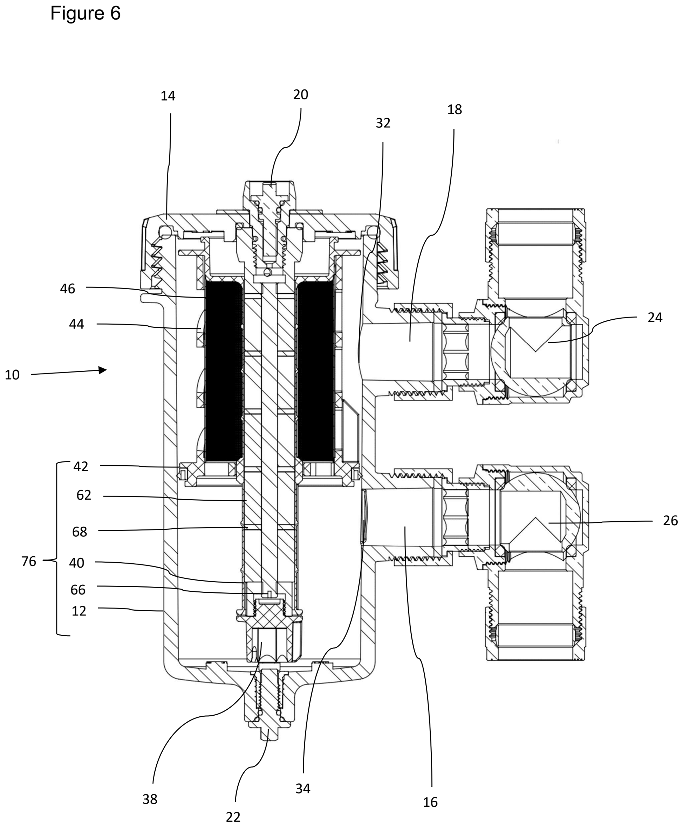

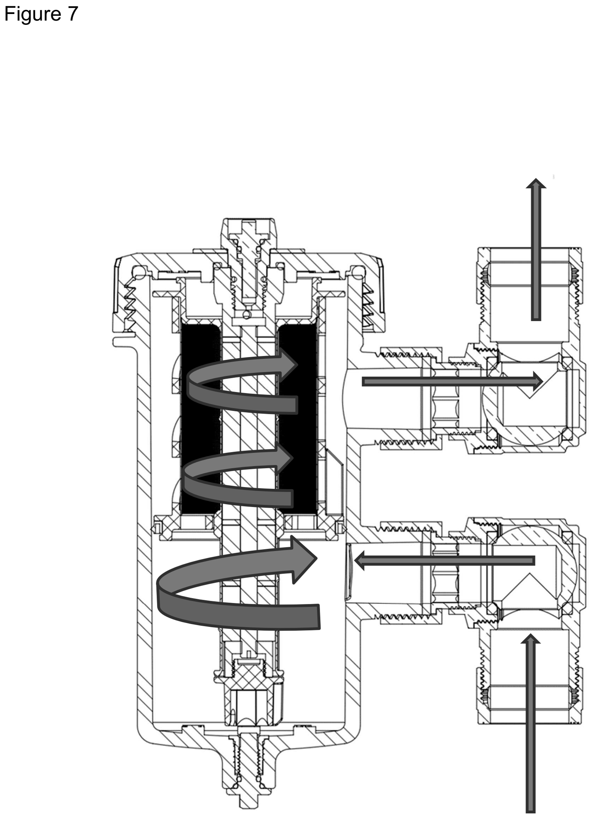

Note that the embodiment of Figure 4 differs from the embodiment shown in Figure 6 and Figure 7 in that the arrangement of the thread between the fixing element and the magnet is inverted. In Figure 4, there is an external thread on a protrusion from the bottom of the magnet, corresponding to an internal thread in an aperture through the fixing element. In Figure 6 and Figure 7 there is an internal thread in a blind hole in the bottom of the magnetic element, corresponding to an external thread on a protrusion from the top of the fixing element.

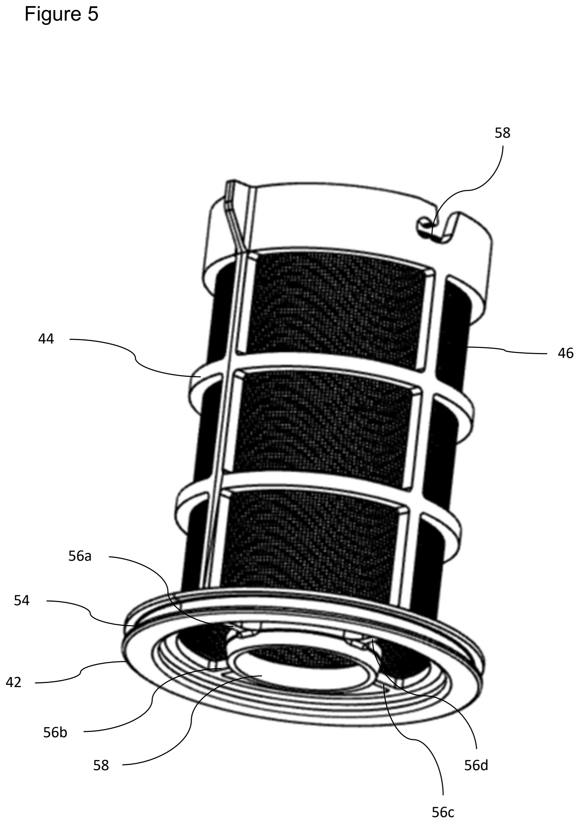

Surrounding the sheath 40 is the mesh basket 44, 46. This comprises a supporting basket structure 44 (Figure 5) with vertical and horizontal supports (i.e. ribs and spines) which are fixed to a mesh tube 46, the mesh being disposed on the inside of the supporting basket 44. The basket 44 is attached to the sheath 40 at the top of the separator device 10 by a bayonet-type connection 58. The bottom of the basket 44 is also connected to the sheath 40 at a second position further down the sheath 40. Here, a smaller diameter ring 58 is disposed around the sheath 40, with four spokes 56a-d connecting the ring 58 to the bottom of the basket 44. At the bottom of the basket 44, a flange 42 forms a barrier positioned above the inlet 16, to prevent fluid from bypassing the mesh. The top of the basket is positioned marginally beneath the lid 14 and above the outlet 18. This arrangement ensures that all fluid entering at the inlet passes through the open end of the basket, past the magnet and through the mesh.

In use, the separator device 10 functions as follows. The central heating and/or cooling system will include a pump, which drives fluid around the system. As shown in Figure 7, fluid enters the housing 12 of the separator device 10 at the inlet 16. As the fluid enters it flows past an angled blockage 34, which will alter the flow trajectory, establishing a swirl of fluid within the housing 12. Here, heavier suspended particles fall out of the fluid flow into the sediment collection region 76 comprising the portion of the housing 12 between the floor of the housing 12 and the inlet 16. Due to the lack of fluid movement in this zone, sediment that has been removed from the fluid settles and remains in the sediment collection region 76 until cleaned.

Fluid with the remaining suspended particles travels upwards through the separator device 10 in a swirl like pattern around the central magnet sheath 66. Magnetic particles are attracted by the magnetic fields surrounding the sheath 66 and captured from the fluid, remaining attached to the sheath until cleaned. This magnetic filtration occurs on the central portion of the sheath, which contains magnets 62a-e as seen in Figure 6. The swirl of fluid then enters the mesh basket 44, through the open end facing the inlet 16. All fluid enters the basket 44 due to a barrier 42 that spans the gap between the outside edge of the open-ended basket 44 and the interior wall of the housing 12. Pressure from the continuous flow of fluid pushes fluid through the mesh 46 apertures of the basket 44, removing lighter non-magnetic particles that had previously not be separated in the sediment collection region 76. Once in the post-filtration region outside the basket 44, fluid travels out of the housing 12, via the outlet 18, back to the normal circulation of the heating and/or cooling system.

The swirl of fluid helps in continuously dislodging the captured sediment from the apertures of the mesh 46. These fall with gravity to settle alongside the heavier sediment in the sediment collection region 76. The continuous capturing and dislodging of sediment in the mesh 46 reaches an equilibrium, helping reduce the likelihood of blockages, improving the efficiency and effectiveness of the separator device 10.

The embodiments described above are provided by way of example only, and various changes and modifications will be apparent to persons skilled in the art without departing from the scope of the present invention as defined by the appended claims.

## Claims

1. A separator device for removing suspended particles from central heating and/or cooling system fluid, the separator device comprising:
a housing in the form of a hollow container;
an inlet to the housing and an outlet from the housing, the inlet being spaced above a floor of the housing and arranged for setting up a swirl of fluid within the housing, and the outlet being spaced above the inlet;
a sediment collection region in a lower portion of the housing, disposed between the floor of the housing and the inlet, for allowing gravity induced particle separation;
a magnetic element for attracting and retaining magnetic particles, at least part of the magnetic element being positioned above the inlet and below the outlet;
a filtration component in the form of a basket, the basket having an open end positioned above the inlet and below the outlet and facing the sediment collection region, and the basket including mesh sidewall(s) surrounding at least part of the magnetic element, the mesh sidewalls defining a pre-filtration flow region inside the basket and a post-filtration flow region between the outside of the basket and an inside wall of the housing; and
a barrier separating the post-filtration flow region outside the basket from a region below the basket, for preventing flow from the inlet to the outlet other than through the mesh.

2. A separator as claimed in any of the preceding claims, in which a removable lid is provided to close a top end of the housing, and in which the magnetic element is attached to the lid and extends into the housing when the lid is in place on the housing.

3. A separator as claimed in any of the preceding claims, in which a sheath partly or wholly encases the magnetic element, and in which a fixing element is provided, the fixing element being attachable to the lower end of the magnetic element for retaining the sheath in position around the magnetic element.

4. A separator as claimed in claim 3, in which the lower end of the magnetic element is attached to the fixing element via a screw thread.

5. A separator as claimed in claim 4, in which the fixing element includes formations which interfere with corresponding formations at the bottom of the housing, for preventing rotation of the fixing element with respect to the floor of the housing.

6. A separator as claimed in claim 5, in which the screw thread attaching the magnetic element to the fixing element is of sufficient length to remain attached to the fixing element when the lid is unscrewed.

7. A separator as claimed in any of the preceding claims, in which the sheath is loosely fitted around the magnetic element so that the magnetic element rotates instead the sheath when turned.

8. A separator as claimed in any of the preceding claims, in which the filtration component is attached to the lid.

9. A separator as claimed in any of the preceding claims, in which the filtration component has support pieces spanning the mesh to form a filter shell.

10. A separator as claimed in any of the preceding claims, in which the barrier is in the form of a flange positioned around the bottom of the filtration component, in which the flange seals against the wall of the housing.

11. A separator as claimed in any of the preceding claims, in which the magnetic element comprises a substantially cylindrical rod which extends into the housing.

12. A separator as claimed in any of the preceding claims, in which the basket is in the form of a substantially cylindrical shell.

13. A method of removing debris from a central heating system, the method comprising providing a separator device according to any previous claims in the system circuit of the central heating system.

14. A method as claimed in claim 13, in which the separator device is provided on the return pipe to the boiler.

15. A central heating and/or cooling system fitted with a separator device as claimed in any of claims 1 to 12.
